# EUROPEAN PATENT SPECIFICATION

(11) **EP 4 341 578 B1**
(45) Date of publication and mention of the grant of the patent: **29.01.2025**
(21) Application number: 22730610.7
(22) Date of filing: 19.05.2022
(51) Int. Cl.: F16G 15/08, F16G 15/04

(54) **SWIVEL CONNECTION DEVICE**
DREHVERBINDUNGSVORRICHTUNG
DISPOSITIF DE RACCORDEMENT PIVOTANT

(30) Priority: 19.05.2021 IT 202100012905
(43) Date of publication of application: 27.03.2024
(73) Proprietor: Camp S.p.A., 23834 Premana (Lecco) (IT)
(72) Inventor: CODEGA, Antonio, 23834 PREMANA, LECCO (IT); DONADONI, Andrea, 23834 PREMANA, LECCO (IT)
(74) Representative: Croce, Valeria
(86) International application number: PCT/IB2022/054670
(87) International publication number: WO 2022/243922

(56) References cited:
- EP-A1- 3 299 332
- EP-A1- 3 323 474
- WO-A1-90/10803
- US-A- 4 723 804
- US-A1- 2020 292 114

## Description

The present invention relates to a swivel connection device, especially for the connection of elements subjected to possible rotational loads.

There are known swivel connection devices substantially consisting of one or more closed rings, which are freely rotatable about a central rotation axis..

A type of known swivel connection device comprises two rings being freely rotatable relative to one another about a central rotation axis defined by a central body. The rings comprise a hooked portion and a closing element being screwable to the hooked portion so as to close the ring. A swivel connection device thus configured is described in US 2015/143674 A1, for example.

A further type of known swivel connection device consists of a single non-open ring coupling element, connected to a central body being screwable to a wall or other support structure. A device thus configured is described in US 8,424,638 B1, for example.

A further known swivel connection device, particularly used for lifting loads, is described in document WO 90/10803 and comprises an anchoring unit connected to a base element, for example a platform or a rotatable hook, on which the load to be lifted is placed. This device also comprises a central body, interposed between said anchoring unit and the base element and being rotatable with respect to the anchoring unit, to which, during assembly, a connection element is connected, being rotatable with respect to the central body and forming a ring through which a rope can be passed to lift the load.

Solutions like those described above, although satisfactory under various technical aspects, have several disadvantages. For example, these known devices have a complex assembly, which does not ensure high reliability and safety, as well as having high costs.

It is the object of the present invention to provide a swivel connection device such as to overcome at least some of the drawbacks of the prior art.

It is a particular object of the present invention to provide a swivel connection device that can be quickly and safely assembled.

It is a further particular object of the present invention to provide a swivel connection device with reduced costs and complexity.

These and other objects are achieved by a swivel connection device according to independent claim 1.

The dependent claims relate to preferred and advantageous embodiments of the present invention.

In order to better understand the invention and appreciate the advantages thereof, some non-limiting exemplary embodiments thereof will be described below with reference to the accompanying drawings, in which:

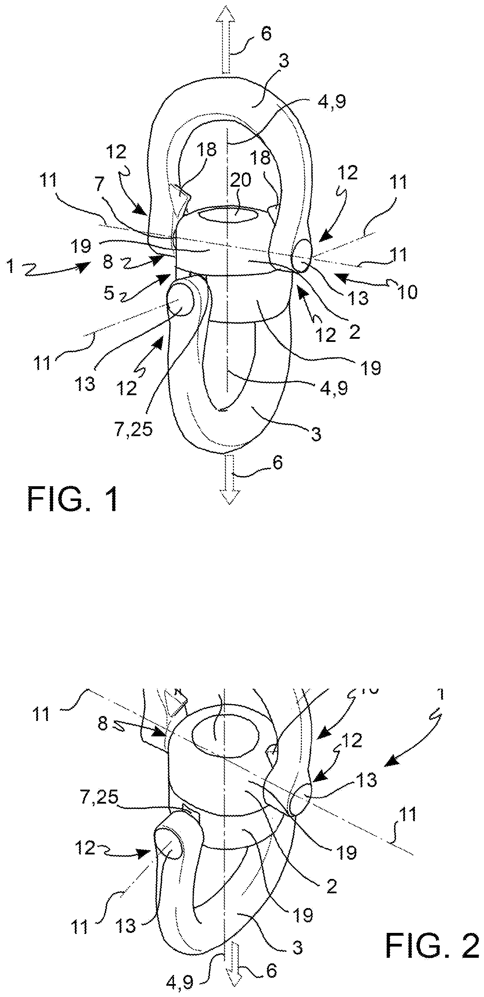

- figure 1 is a perspective view of a swivel connection device, according to an embodiment of the invention;
- figure 2 is a top perspective view of the swivel connection device depicted in figure 1;

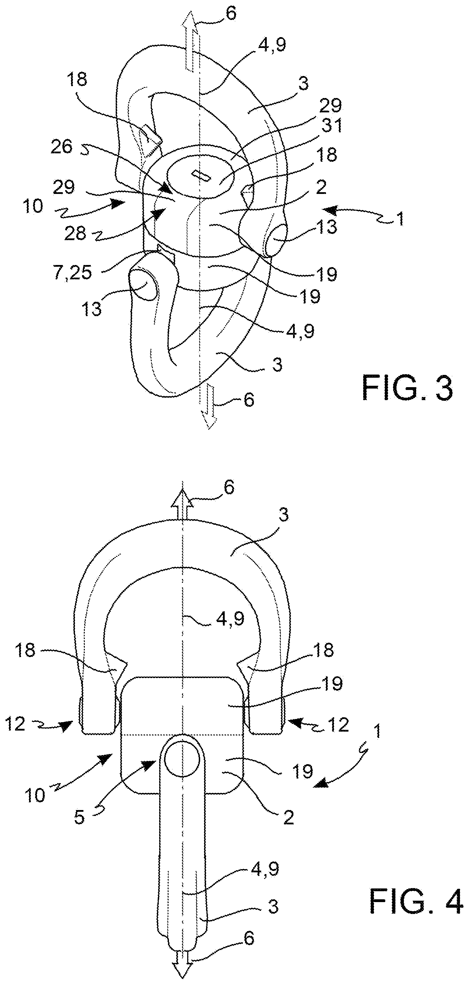

- figure 3 is a bottom perspective view of the swivel connection device depicted in figure 1;
- figure 4 is a front view of the swivel connection device depicted in figure 1;

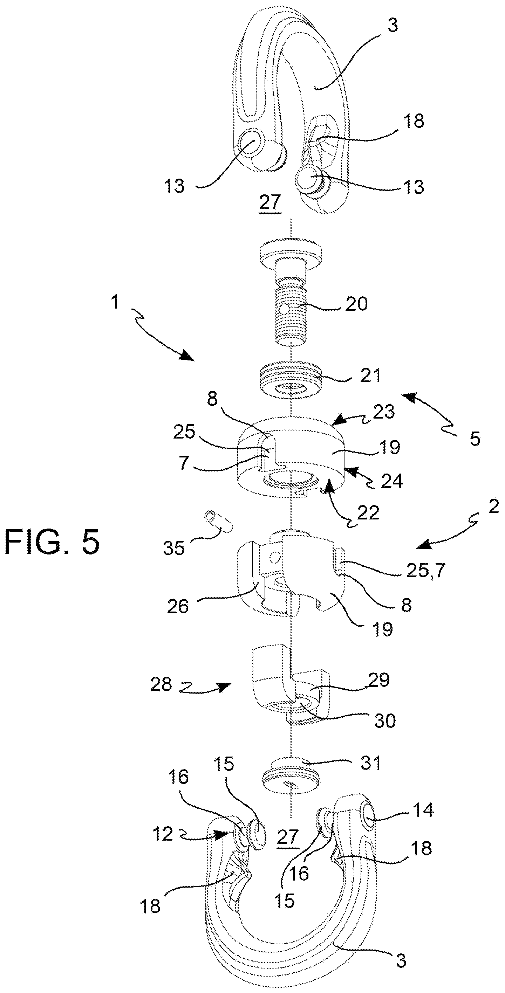

- figure 5 is an exploded view of a swivel connection device, according to an embodiment of the invention;

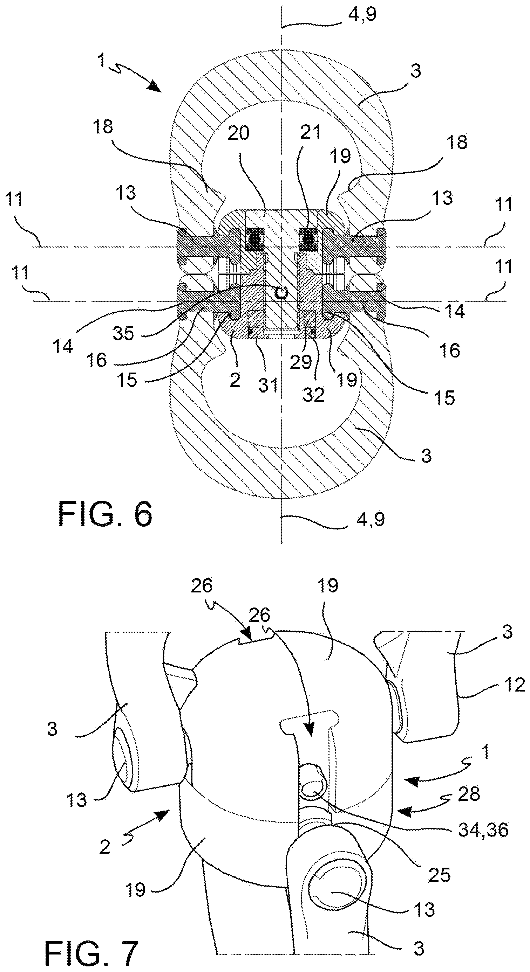

- figure 6 is a longitudinal section view of a swivel connection device, according to an embodiment of the invention;
- figure 7 is a detail view of a swivel connection device, according to a further embodiment of the invention;
- figures 8A, 8B, 8C and 8D are front views of components being connectable to a swivel connection device, according to an embodiment of the invention;
- figures 9A and 9B are front section views of a swivel connection device, according to further embodiments.

With reference to the figures, a swivel connection device is generally indicated by reference numeral 1.

The device 1 comprises a housing body 2, two coupling elements 3 connected to the housing body 2, and hinged connection means 5 connected to the housing body 2.

The two coupling elements 3 are freely rotatable relative to one another about a main rotation axis 4 defined by the hinged connection means 5.

Each coupling element 3, in the operating configuration, is configured to support a respective load directed along a respective load direction 6 substantially parallel to the main rotation axis 4.

According to an aspect of the invention, the housing body 2 defines a plurality of connection seats 7, and each connection seat 7 defines a stop wall 8.

Moreover, each of the two coupling elements 3 is inserted into a respective connection seat 7, against the respective stop wall 8, along an insertion direction 9.

Furthermore, such an insertion direction 9 of each coupling element 3 is in a direction concordant with the load direction 6 of the load supported by the same coupling element 3.

Advantageously, the coupling elements 3, in order to be connected to the housing body 2, do not require pins, screws or other components acting as load-bearing elements.

Advantageously, a swivel connection device thus configured can be quickly and safely assembled.

Further advantageously, a swivel connection device thus configured has reduced costs and complexity.

According to an embodiment of the invention, the coupling elements 3 are connected to the housing body 2 by means of a geometric connection 10.

Moreover, the geometric connection 10 is reversible to allow each hook 3 to be disconnected from the housing body 2.

Advantageously, the geometric connection 10 allows safely disassembling and reassembling the device 1, so as to facilitate the connection thereof with bulky or hard-to-move elements.

According to an embodiment, the geometric connection 10 forms an undercut.

### Coupling elements 3

According to an embodiment of the invention, the coupling elements 3 are freely rotatable relative to one another about a respective further secondary rotation axis 11.

Each secondary rotation axis 11 is defined by the respective connection seat 7, at the stop wall 8.

The coupling elements 3 are freely rotatable relative to one another about the respective secondary rotation axes 11 up to mutual interference.

Advantageously, this further degree of freedom accommodates any further movement of the loads supported by the coupling elements 3, thus reducing the tensions acting on the coupling elements 3.

According to an embodiment, the coupling elements 3 have an open-ring shape, so as to form two ring ends 12 and a connection opening 27 defined between the two ring ends 12.

Each coupling element 3 comprises two pins 13 positioned at the ring ends 12 and extending one towards the other into the coupling element 3.

The pins 13 define a pin foot 14 connected to the ring end 12, a pin head 15 opposite to the pin foot 14 and housed in the connection seat 7 of the housing body 2, and a pin body 16 interposed between the pin foot 14 and the pin head 15.

According to an embodiment, the pin head 15 forms an enlarged cross-section with respect to the pin body 16.

Advantageously, such an enlarged cross-section is suitable for supporting a sudden side load acting on the coupling elements 3, or a sudden load due to an incorrect installation of device 1.

According to an embodiment, the pin 13 is shaped substantially axially symmetrical with respect to an axis parallel to the secondary rotation axis 11.

According to an embodiment, the pin foot 14 is inserted into the ring end 12 and is fixed to the ring end 12 by means of a washer 17. The washer 17 is configured to ensure an increased structural strength of device 1.

According to an embodiment, the pins 13 are made in a single piece with the coupling element 3.

According to a preferred embodiment, the two pins 13 are made of a more resistant material than the material of the coupling element 3.

The pins 13 are preferably made of stainless steel.

According to an embodiment, each coupling element 3 comprises at least one projection 18 extending into the coupling element 3.

Each coupling element 3 preferably comprises two projections 18 opposite to each other.

Advantageously, such projections 18 promote the correct positioning and assembly of the components of device 1 and prevent incorrect assembly operations.

According to an embodiment, the projections are positioned at the housing body 2, so as to embrace the housing body 2.

According to a preferred embodiment, the projections 18 are configured to have a saw-tooth shape.

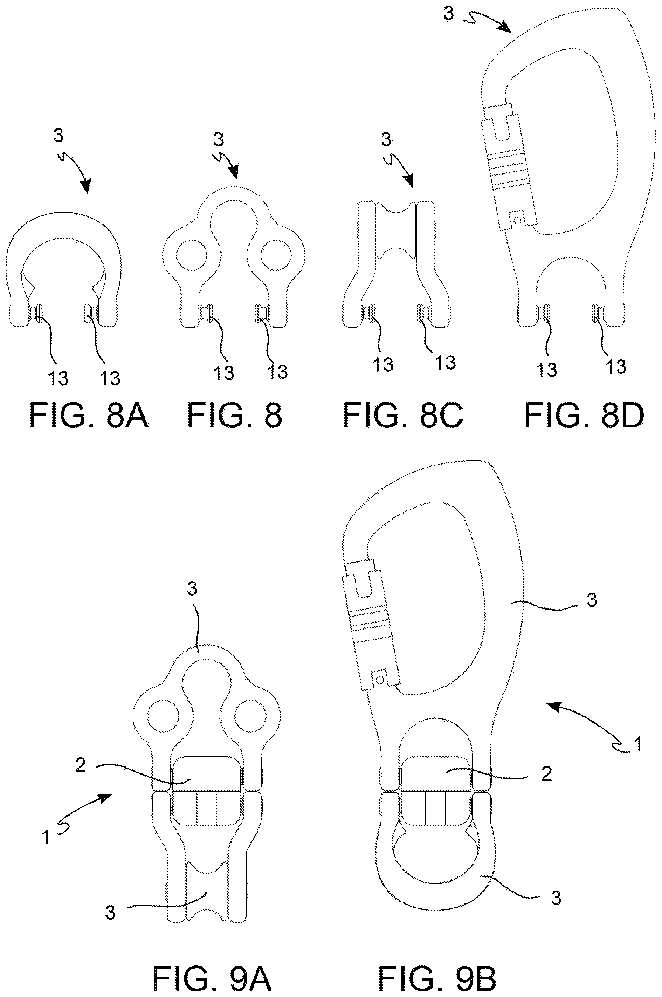

According to an alternative embodiment, the coupling elements 3 have a pulley shape, a multi-anchor shape, or connector shape, preferably a carabiner (figs. 8A-D, figs. 9A-B).

### Housing body 2

According to an embodiment, the housing body 2 comprises two half-shells 19, which are connected to each other by the hinged connection means 5 and freely rotatable relative to one another about the main rotation axis 4.

To each half-shell 19 is connected one of the two coupling elements 3.

According to an embodiment, the hinged connection means 5 comprise an axial bearing 21 inserted into one of the two half-shells 19.

Moreover, the hinged connection means 5 comprise a screw 20 extending along the main rotation axis 4, through the two half-shells 19 and through the axial bearing 21.

The head of screw 20 preferably abuts against the axial bearing 21.

Preferably, the axial bearing 21 is of the ball type.

According to an embodiment, a first half-shell 19 of said two half-shells 19 defines two insertion guides 26.

According to this embodiment, by rotating at least one of the two half-shells 19, either the insertion guides 26 or the connection seat 7 made in the first half-shell 19 can be aligned with the connection seat 7 made in the opposite second half-shell 19.

Advantageously, such a configuration allows inserting the first coupling element 3 into the insertion guides 26 of a first half-shell 19, along an insertion direction 9. By an appropriate rotation of at least one of the two half-shells 19, the insertion guides 26 of the first half-shell 19 can be aligned with the connection seat 7 of the opposite second half-shell 19. By further sliding the first coupling element 3 along the insertion guides 26, said first coupling element 3 can be inserted into the connection seat 7 of the opposite second half-shell 19. Once the first coupling element 3 has been inserted into the connection seat 7 of the opposite second half-shell 19,the first coupling element 3 can be positioned to abut against the stop walls 8 of the connection seat 7 of the opposite second half-shell 19. By a further appropriate rotation of at least one of the two half-shells 19, the connection seat 7 of the opposite second half-shell 19 can be aligned with the connection seat 7 of the first half-shell 19. By sliding the first coupling element 3 along the connection seat 7 of the opposite second half-shell 19 along the insertion direction 9 and in the opposite direction with respect to what was done previously, the coupling element 3 can be inserted into the connection seat 7 of the first half-shell 19, so that it abuts against the stop walls 8 of the first half-shell 19. It is now possible to insert the second coupling element 3 into the insertion guides 26 of the first half-shell 19, along the insertion direction 9. By an appropriate rotation of at least one of the two half-shells 19, the insertion guides 26 of the first half-shell 19 can be aligned with the connection seat 7 of the opposite second half-shell 19. By further sliding the second coupling element 3 along the insertion guides 26, said second coupling element 3 can be inserted into the connection seat 7 of the opposite second half-shell 19, respectively. Once the second coupling element 3 has been inserted into the connection seat 7 of the opposite second half-shell 19, the second coupling element 3 can be positioned to abut against the stop walls 8 of the connection seat 7 of the opposite second half-shell 19. The first of the two coupling elements 3 is thus inserted into the respective connection seat 7 of the first half-shell 19. The second of the two coupling elements 3 is inserted instead into the respective connection seat 7 of the second half-shell.

Therefore, in an embodiment, the first half-shell 19 comprises both the insertion guides 26 and the connection seat 7, and the second half-shell 19 comprises only the connection seat 7.

According to an embodiment, each half-shell 19 defines an overlooking wall 22 facing against the opposite half-shell 19, a bottom wall 23 facing away from the opposite half-shell 19, and a peripheral wall 24 interposed between the overlooking wall 22 and the bottom wall 23.

According to an embodiment, each connection seat 7 comprises two connection guides 25.

According to this embodiment, by rotating at least one of the two half-shells 19, either the insertion guides 26 or the connection guides 25 made in the first half-shell 19 can be aligned with the connection guides 25 made in the opposite second half-shell 19.

According to an embodiment, said connection guides 25 are opposite to each other with respect to the main rotation axis 4.

According to an embodiment, the connection guides 25 are hollowed out in the overlooking wall 22 and extend into the half-shell 19. Advantageously, the connection guides 25 extending into the half-shell 19, at their end, define the two stop walls 8 of the connection seat 7.

Moreover according to an embodiment, the connection guides 25 are open at the peripheral wall 24.

Advantageously, such a configuration allows inserting the pin heads 15 of the coupling element 3 into the connection guides 25 of a half-shell 19, through the overlooking wall 22. The pin heads 15 thus inserted can be positioned, by sliding them along the connection guides 25, so as to abut against the stop walls 8. According to an embodiment, the connection guides 25 are shaped so as to form an undercut connection with the pin heads 15 of the coupling element 3.

In detail, the connection guides 25 have a cross section such that the pin heads 15 and the pin bodies 16 of the coupling element 3 are insertable into the connection guides 25 of the half-shells 19 only along the insertion direction 9.

In greater detail and in accordance with the embodiment in which the pin head 15 forms an enlarged cross section with respect to the pin body 16, each connection guide 25 comprises a first portion and a second portion, where the first portion has a cross section of greater width than that of the second portion (not shown in the figure). The pin heads 15 are thus insertable along the insertion direction 9 into the first portion with a cross-section of greater width. The pin body 16 will be insertable instead along the insertion direction 9 into the second portion with a smaller cross-section.

Advantageously, even in the presence of a side load acting on one of the coupling elements 3 in a direction not concordant with direction 9, the load is withstood and the pin heads 15 are prevented from coming out of the connection guides 25 along a direction not concordant with the insertion direction 9.

According to an embodiment, the insertion guides 26 defined in one of the two half-shells 19 are opposite to each other with respect to the main rotation axis 4.

According to an embodiment, the insertion guides 26 are hollowed out in the bottom wall 23 and extend into the half-shell 19, opening out in the overlooking wall 22.

According to an embodiment, the insertion guides 26 are open at the peripheral wall 24.

Advantageously, such a configuration allows inserting the pin heads 15 of the first coupling element 3 into the insertion guides 26 of a first half-shell 19 through the bottom wall 23 of said first half-shell 19, along an insertion direction 9. By an appropriate rotation of at least one of the two half-shells, the insertion guides 26 of the first half-shell 19 can be aligned with the connection guides 25 of the opposite second half-shell 19. By further sliding the pin heads 15 of the first coupling element 3 along the insertion guides 26, the pin heads 15 of said first coupling element 3 can be inserted into the connection guides 25 of the opposite second half-shell 19 (as described above with reference to each connection guide 25, which comprises a first portion and a second portion, where the first portion has a cross-section of greater width compared to the one of the second portion). Once the pin heads 15 have been inserted into the connection guides 25 of the opposite second half-shell 19, the pin heads 15 can be positioned to abut against the stop walls 8 of the connection guides 25 of the opposite second half-shell 19. By a further appropriate rotation of at least one of the two half-shells 19, the connection guides 25 of the opposite second half-shell 19 can be aligned with the connection guides 25 of the first half-shell 19. By sliding the pin heads 15 of the first coupling element 3 along the connection guides 25 along the insertion direction 9 and in the opposite direction with respect to what was done previously, the pin heads 15 of said first coupling element 3 can be inserted into the connection guides 25 of the first half-shell 19 so as to abut against the stop walls 8 of the first half-shell 19. It is now possible to insert the pin heads 15 of the second coupling element 3 into the insertion guides 26 of the first half-shell 19 through the overlooking wall 22, along the insertion direction 9. By an appropriate rotation of at least one of the two half-shells, the insertion guides 26 of the first half-shell 19 can be aligned with the connection guides 25 of the second half-shell 19. By further sliding the pin heads 15 of the second coupling element 3 along the insertion guides 26, the pin heads 15 of said second coupling element 3 can be inserted into the connection guides 25 of the opposite second half-shell 19, through the overlooking wall 22. Once the pin heads 15 have been inserted into the connection guides 25 of the opposite second half-shell 19, the pin heads 15 can be positioned to abut against the stop walls 8 of the same connection guides 25. The pin heads 15 of the first of the two coupling elements 3 connected to the housing body 2 are thus positioned in the connection guides 25 of the first half-shell 19. The pin heads 15 of the second of the two coupling elements 3 are positioned instead in the connection guides 25 of the opposite second half-shell 19.

According to a preferred embodiment, the insertion guides 26 are formed on the half-shell 19 opposite to the half-shell 19 in which the axial bearing 21 is installed.

Advantageously, such a configuration reduces the overall dimensions and complexity of device 1.

According to an embodiment, the insertion guides 26 are orthogonal to the connection guides 25, with reference to the main rotation axis 4.

According to an embodiment, the device 1 comprises locking means 28 configured to prevent the disassembly of the coupling elements 3 from the housing body 2.

According to an embodiment, the locking means 28 comprise a cap 29 conveniently shaped to be inserted into the insertion guides 26 and prevent the coupling elements 3 from coming out of the insertion guides 26.

According to an embodiment, the cap 29 is made in a single piece and is insertable into the insertion guides 26 through the bottom wall 23 of the half-shell 19.

According to an embodiment, the cap 29 is made of a metal material and is fixed, by interference, in the insertion guides 26.

According to an embodiment, the cap 29 forms a central hole 30 adapted to be crossed by screw 20.

According to an embodiment, the device 1 comprises a closing nut screw 31.

The closing nut screw 31 is screwable to the screw 20, so as to abut against the cap 29 and prevent the cap 29 from coming out of the insertion guides 26.

The closing nut screw 31 forms a nut screw head 33 shaped so as to allow screwing the closing nut screw 31 to screw 20.

According to an embodiment, the closing nut screw 31 comprises a gasket 32, e.g., an O-ring, positioned at the nut screw head 33, and adapted to improve the sealing action of the closing nut screw 31.

Advantageously, the cap 29 and the closing nut screw 31 do not work as load-bearing elements, and therefore are not linked to the structural strength of device 1.

Further advantageously, the device 1 thus configured requires the manual operation of only the closing nut screw 31 for the insertion and extraction of both the coupling elements 3 and for the very same closing and opening of the device 1 itself.

According to an alternative embodiment, the locking means 28 comprise snap-closing means, e.g., spring buttons 34, positioned at the insertion guides 26.

The spring buttons 34 comprise buttons 36 being retractable into the housing body 2, and compression springs 35, housed in the housing body 2, and configured to stress the buttons 36 coming out of the housing body 2.

Advantageously, the device 1 thus configured does not require the manual operation of any screw or other threaded element for the insertion and extraction of both the coupling elements 3 and for the very same closing and opening of the device 1 itself.

Obviously, those skilled in the art will be able to make changes or adaptations to the present invention without departing from the scope of the claims set forth below.

## Claims

1. A swivel connection device (1), comprising:
- a housing body (2);
- two coupling elements (3) connected to the housing body (2);
- hinged connection means (5) connected to the housing body (2);
wherein the two coupling elements (3) are freely rotatable relative to one another about a main rotation axis (4) defined by the hinged connection means (5),
wherein each coupling element (3), in the operating configuration, is configured to support a respective load directed along a respective load direction (6) substantially parallel to the main rotation axis (4),
wherein the housing body (2) defines a plurality of connection seats (7), and each connection seat (7) defines a stop wall (8),
wherein each of the two coupling elements (3) is inserted into a respective connection seat (7), against the respective stop wall (8), along an insertion direction (9),
and wherein said insertion direction (9) of each coupling element (3) is in a direction concordant with the load direction (6) of the load supported by the same coupling element (3),
wherein the housing body (2) comprises two half-shells (19), connected to each other by the hinged connection means (5), said half-shells (19) being freely rotatable relative to one another about the main rotation axis (4), wherein to each half-shell (19) is connected one of the two coupling elements (3),
**characterized in that**
a first half-shell (19) defines two insertion guides (26),
wherein, by rotating at least one of the two half-shells (19), either the insertion guides (26) or the connection seat (7) made in the first half-shell (19) can be aligned with the connection seat (7) made on the opposite second half-shell (19).
wherein each connection seat (7) comprises two connection guides (25),
and wherein, by rotating at least one of the two half-shells (19), either the insertion guides (26) or the connection guides (25) made in the first half-shell (19) can be aligned with the connection guides (25) made on the opposite second half-shell (19).
wherein each half-shell (19) defines an overlooking wall (22) facing against the opposite half-shell (19), a bottom wall (23) facing away from the opposite half-shell (19), and a peripheral wall (24) interposed between the overlooking wall (22) and the bottom wall (23),
wherein the connection guides (25) are opposite to each other with respect to the main rotation axis (4),
wherein the connection guides (25) are hollowed out in the overlooking wall (22), and extend into the half-shell (19),
and wherein the connection guides (25) are open at the peripheral wall (24).
the insertion guides (26) defined in the first half-shell (19) are opposite to each other with respect to the main rotation axis (4),
wherein the insertion guides (26) are hollowed out in the bottom wall (23) and extend into the half-shell (19), opening out in the overlooking wall (22),
and wherein the insertion guides (26) are open at the peripheral wall (24).

2. A device (1) according to claim 1, wherein the coupling elements (3) are connected to the housing body (2) by means of a geometric connection (10),
and wherein said geometric connection (10) is reversible to allow each coupling element (3) to be disconnected from the housing body (2).

3. A device (1) according to claim 2, wherein the geometric connection (10) forms an undercut.

4. A device (1) according to any one of the preceding claims, wherein the coupling elements (3) are freely rotatable relative to one another about a respective further secondary rotation axis (11), and wherein each secondary rotation axis (11) is defined by the respective connection seat (7), at the stop wall (8).

5. A device (1) according to any one of the preceding claims, wherein the coupling elements (3) have an open-ring shape, so as to form two ring ends (12) and a connection opening (27) defined between the two ring ends (12), or they have a pulley, multi-anchor, or connector shape.

6. A device (1) according to claim 5, wherein each coupling element (3) comprises two pins (13), each positioned at the ring ends (12), and extending one towards the other into the coupling element (3),
wherein the pins (13) each define a pin foot (14) connected to the ring end (12), a pin head (15) opposite to the pin foot (14) and housed in the connection seat (7) of the housing body (2), and a pin body (16) interposed between the pin foot (14) and the pin head (15), and optionally, wherein:
- the pin head (15) forms an enlarged cross-section with respect to the pin body (16), and/or
- the pin foot (14) is inserted into the ring end (12), and is fixed to the ring end (12) by means of a washer (17), and/or
- the two pins (13) are made of a more resistant material than the material of the coupling element (3).

7. A device (1) according to any one of the preceding claims, wherein each coupling element (3) comprises at least one projection (18) extending into the coupling element (3).

8. A device (1) according to claim 7, wherein each coupling element (3) comprises two projections (18) opposite to each other, and wherein the projections are positioned at the housing body (2), so as to embrace the housing body (2),
and, optionally, the projections (18) are configured to have a saw-tooth shape.

9. A device (1) according to any one of the preceding claims, wherein - the hinged connection means (5) comprise an axial bearing (21) inserted into one of the two half-shells (19), and/or
- the hinged connection means (5) comprise a screw (20) extending along the main rotation axis (4), through the two half-shells (19) and through the axial bearing (21).

10. A device (1) according to claims 6, wherein the connection guides (25) are shaped so as to form an undercut connection with the pin heads (13) of the coupling element (3).

11. A device (1) according to any one of the preceding claims and according to claims 9 and 10, wherein the insertion guides (26) are formed on the half-shell (19) opposite to the half-shell (19) in which the axial bearing (21) is installed.

12. A device (1) according to any one of the preceding claims and according to claim 10, wherein the insertion guides (26) are orthogonal to the connection guides (25), with reference to the main rotation axis (4).

13. A device (1) according to any one of the preceding claims, comprising locking means (28) configured to prevent the disassembly of the coupling elements (3) from the housing body (2).

14. A device (1) according to any one of the preceding claims and according to claim 13, wherein the locking means (28) comprise a cap (29) conveniently shaped to be inserted into the insertion guides (26), and prevent the coupling elements (3) from coming out of the insertion guides (26),
and optionally, the cap (29) is made in a single piece and is insertable into the insertion guides (26) through the bottom wall (23) of the half-shell (19),
and/or the cap (29) is made of a metal material and is fixed, by interference, in the insertion guides (26).

15. A device (1) according to claim 14, wherein the cap (29) forms a central hole (30) adapted to be crossed by the screw (20), the device (1) further comprising a closing nut screw (31), wherein the closing nut screw (31) is screwable to the screw (20), so as to abut against the cap (29) and prevent the cap (29) from coming out of the insertion guides (26), and wherein the closing nut screw (31) forms a nut screw head (33) shaped so as to allow the closing nut screw (31) to be screwed to the screw (20).

16. A device (1) according to any one of the preceding claims and according to claim 13, wherein the locking means (28) comprise snap-closing means, and optionally, the snap-closing means comprise spring buttons (34) positioned at the insertion guides (26), and wherein the spring buttons (34) comprise buttons (36) being retractable into the housing body (2) and compression springs (35) housed in the housing body (2) and configured to stress the buttons (36) coming out of the housing body (2).

## Patentansprüche

1. Drehlagerverbindungsvorrichtung (1), umfassend:
- einen Gehäusekörper (2);
- zwei Kopplungselemente (3), welche mit dem Gehäusekörper (2) verbunden sind;
- gelenkige Verbindungsmittel (5), welche mit dem Gehäusekörper (2) verbunden sind;
wobei die zwei Kopplungselemente (3) relativ zueinander um eine Hauptrotationsachse (4) frei rotierbar sind, welche durch die gelenkigen Verbindungsmittel (5) definiert ist,
wobei jedes Kopplungselement (3), in der Betriebskonfiguration, dazu eingerichtet ist, eine entsprechende Belastung zu haltern, welche entlang einer entsprechenden Belastungsrichtung (6) gerichtet ist, welche im Wesentlichen parallel zu der Hauptrotationsachse (4) ist,
wobei der Gehäusekörper (2) eine Mehrzahl von Verbindungssitzen (7) definiert, und wobei jeder Verbindungssitz (7) eine Stoppwandung (6) definiert,
wobei jedes der zwei Kopplungselemente (3) in einen entsprechenden Verbindungssitz (7) eingeführt ist, gegen die entsprechende Stoppwandung (8), entlang einer Einführungsrichtung (9),
und wobei die Einführungsrichtung (9) jedes Kopplungselements (3) in einer Richtung mit der Belastungsrichtung (6) der Belastung konkordant ist, welche durch das gleiche Kopplungselement (3) gehaltert ist,
wobei der Gehäusekörper (2) zwei Halbschalen (19) umfasst, welche miteinander durch die gelenkigen Verbindungsmittel (5) verbunden sind, wobei die Halbschalen (19) relativ zueinander um die Hauptrotationsachse (4) frei rotierbar sind, wobei eines der zwei Kopplungselemente (3) mit jeder Halbschale (19) verbunden ist, **dadurch gekennzeichnet, dass** eine erste Halbschale (19) zwei Einführungsführungen (26) umfasst,
wobei, durch ein Rotieren wenigstens einer der zwei Halbschalen (19), entweder die Einführungsführungen (26) oder der Verbindungssitz (7), welcher in der ersten Halbschale (19) erzeugt ist, mit dem Verbindungsitz (7) ausgerichtet sein können, welcher an der entgegengesetzten zweiten Halbschale (19) erzeugt ist,
wobei jeder Verbindungssitz (7) zwei Verbindungsführungen (25) umfasst,
und wobei, durch ein Rotieren wenigstens einer der zwei Halbschalen (19), entweder die Einführungsführungen (26) oder die Verbindungsführungen (25), welche in der ersten Halbschale (19) erzeugt sind, mit den Verbindungsführungen (7) ausgerichtet sein können, welche an der entgegengesetzten zweiten Halbschale (19) erzeugt sind,
wobei jede Halbschale (19) eine zugewandte Wandung (22), welche gegen die entgegengesetzte Halbschale (19) gewandt ist, eine untere Wandung (23), welche weg von der entgegengesetzten Halbschale (19) gewandt ist, und eine Umfangswandung (24) definiert, welche zwischen der zugewandten Wandung (22) und der unteren Wandung (23) eingefügt ist,
wobei die Verbindungsführungen (25) mit Bezug zu der Hauptrotationsache (4) zueinander entgegengesetzt sind,
wobei die Verbindungsführungen (25) in der zugewandten Wandung (22) ausgehöhlt sind und sich in die Halbschale (19) erstrecken,
und wobei die Verbindungsführungen (25) an der Umfangswandung (24) offen sind, wobei die Einführungsführungen (26), welche in der ersten Halbschale (19) definiert sind, mit Bezug zu der Hauptrotationsachse (4) zueinander entgegengesetzt sind, wobei die Einführungsführungen (26) in der unteren Wandung (23) ausgehöhlt sind und sich in die Halbschale (19) erstrecken, in der zugewandten Wandung (22) öffnend,
und wobei die Einführungsführungen (26) an der Umfangswandung (24) offen sind.

2. Vorrichtung (1) nach Anspruch 1, wobei die Kopplungselemente (3) mit dem Gehäusekörper (2) mit Hilfe einer geometrischen Verbindung (10) verbunden sind, und wobei die geometrische Verbindung (10) reversibel ist, um es jedem Kopplungselement (3) zu ermöglichen, von dem Gehäusekörper (2) gelöst zu werden.

3. Vorrichtung (1) nach Anspruch 2, wobei die geometrische Verbindung (10) eine Hinterschneidung bildet.

4. Vorrichtung (1) nach einem der vorhergehenden Ansprüche, wobei die Kopplungselemente (3) relativ zueinander um eine entsprechende weitere Sekundärrotationsachse (11) frei rotierbar sind, und wobei jede Sekundärrotationsachse (11) durch einen jeweiligen Verbindungssitz (7) an der Stoppwandung (8) definiert ist.

5. Vorrichtung (1) nach einem der vorhergehenden Ansprüche, wobei die Kopplungselemente (3) eine offene Ringform aufweisen, um zwei Ringenden (12) und eine Verbindungsöffnung (27) zu bilden, welche zwischen den zwei Ringenden (12) definiert ist, oder sie eine Rollen-, eine Multi-Anker- oder eine Verbindungsstückform aufweisen.

6. Vorrichtung (1) nach Anspruch 5, wobei jedes Kopplungselement (3) zwei Stifte (13) umfasst, welche jeweils an den Ringenden (12) positioniert sind und sich einer zu dem anderen in das Kopplungselement (3) erstrecken,
wobei die Stifte (13) jeweils einen Stiftfuß (14), welcher mit dem Ringende (12) verbunden ist, einen Stiftkopf (15), welcher entgegengesetzt dem Stiftfuß (14) ist und in dem Verbindungssitz (7) des Gehäusekörpers (2) aufgenommen ist, und einen Stiftkörper (16) definieren, welcher zwischen dem Stiftfuß (14) und dem Stiftkopf (15) eingefügt ist,
und optional, wobei:
- der Stiftkopf (15) einen vergrößerten Querschnitt mit Bezug zu dem Stiftkörper (16) bildet, und/oder
- der Stiftfuß (14) in das Ringende (12) eingeführt ist und an dem Ringende (12) mit Hilfe einer Scheibe (17) fixiert ist, und/oder
- die zwei Stifte (13) aus einem widerstandsfähigeren Material als das Material des Kopplungselements (3) erzeugt sind.

7. Vorrichtung (1) nach einem der vorhergehenden Ansprüche, wobei jedes Kopplungselemente (3) wenigstens einen Vorsprung (18) umfasst, welcher sich in das Kopplungselement (3) erstreckt.

8. Vorrichtung (1) nach Anspruch 7, wobei jedes Kopplungselement (3) zwei Vorsprünge (18) umfasst, welche entgegengesetzt zueinander sind, und wobei die Vorsprünge an dem Gehäusekörper (2) positioniert sind, um den Gehäusekörper (2) zu umfassen,
und optional, wobei die Vorsprünge (18) dazu eingerichtet sind, eine Sägezahnform aufzuweisen.

9. Vorrichtung (1) nach einem der vorhergehenden Ansprüche, wobei die gelenkigen Verbindungsmittel (5) ein axiales Lager (21) umfassen, welches in eines der zwei Halbschalen (19) eingeführt ist, und/oder
die gelenkigen Verbindungsmittel (5) eine Schraube (20) umfassen, welche sich entlang der Hauptrotationsachse (4) erstreckt, durch die Halbschalen (19) und durch das axiale Lager (21).

10. Vorrichtung (1) nach Anspruch 6, wobei die Verbindungsführungen (25) geformt sind, um eine Hinterschneidungsverbindung mit den Stiftköpfen (13) des Kopplungselements (3) zu bilden.

11. Vorrichtung (1) nach einem der vorhergehenden Ansprüche und nach Ansprüchen 9 und 10, wobei die Einführungsführungen (26) an der Halbschale (19) gebildet sind, welche entgegengesetzt der Halbschale (19) ist, in welcher das axiale Lager (21) installiert ist.

12. Vorrichtung (1) nach einem der vorhergehenden Ansprüche und nach Anspruch 10, wobei die Einführungsführungen (26) orthogonal zu den Verbindungsführungen (25) sind, mit Bezug zu der Hauptrotationsachse (4).

13. Vorrichtung (1) nach einem der vorhergehenden Ansprüche, welche Verschlussmittel (28) umfasst, welche dazu eingerichtet sind, die Demontage der Kopplungselemente (3) von dem Gehäusekörper (2) zu verhindern.

14. Vorrichtung (1) nach einem der vorhergehenden Ansprüche und nach Anspruch 13, wobei die Verschlussmittel (28) eine Kappe (29) umfassen, welche zweckmäßig geformt ist, um in die Einführungsführungen (26) eingeführt zu sein, und verhindern, dass die Kopplungselemente (3) sich aus den Einführungsführungen (26) lösen, und optional, wobei die Kappe (29) aus einem einzelnen Stück erzeugt ist und in die Einführungsführungen (26) durch die untere Wandung (23) der Halbschale (19) einführbar ist,
und/oder wobei die Kappe (29) aus einem Metallmaterial erzeugt ist und durch Eingreifen in die Einführungsführungen (26) fixiert ist.

15. Vorrichtung (1) nach Anspruch 14, wobei die Kappe (29) ein zentrales Loch (30) bildet, welches dazu angepasst ist, um von der Schraube (20) durchkreuzt zu sein, wobei die Vorrichtung (1) ferner eine Schließ-Schraubenmutter (31) umfasst, wobei die Schließ-Schraubenmutter (31) auf die Schraube (20) schraubbar ist, um an der Kappe (29) anzuliegen und zu verhindern, dass sich die Kappe (29) aus den Einführungsführungen (26) löst, und wobei die Verschluss-Schraubenmutter (31) einen Schraubenmutterkopf (33) bildet, welcher geformt ist, um zu ermöglichen, dass die Verschluss-Schraubenmutter (31) auf die Schraube (20) schraubbar ist.

16. Vorrichtung (1) nach einem der vorhergehenden Ansprüche und nach Anspruch 13, wobei die Verschlussmittel (28) Schnapp-Verschlussmittel umfassen, und optional, wobei die Schnapp-Verschlussmittel Federknöpfe (34) umfassen, welche an den Einführungsführungen (26) positioniert sind, und wobei die Federknöpfe (34) Knöpfe (36), welche zurückschiebbar in den Gehäusekörper (2) sind, und Kompressionsfedern (35) umfassen, welche in dem Gehäusekörper (2) aufgenommen sind und dazu eingerichtet sind, die Knöpfe (36) vorzubelasten, welche aus dem Gehäusekörper (2) kommen.

## Revendications

1. Dispositif de raccordement pivotant (1) comprenant :
- un corps de logement (2) ;
- deux éléments de connexion (3) connectés au corps de logement (2) ;
- des moyens de liaison à charnière (5) connectés au corps de logement (2) ; dans lequel les deux éléments de connexion (3) peuvent être tournés librement l'un par rapport à l'autre autours d'un axe de rotation principal (4) défini par les moyens de liaison à charnière (5),
dans lequel, dans la configuration de fonctionnement, chaque élément de connexion (3) est configuré pour supporter une charge respective orientée dans une direction de charge (6) respective sensiblement parallèle à l'axe de rotation principal (4),
dans lequel le corps de logement (2) définit une pluralité de sièges de connexion (7) et chaque siège de connexion (7) définit une paroi d'arrêt (8),
dans lequel chacun des deux éléments de connexion (3) est inséré dans un siège de connexion (7) respectif, contre la paroi d'arrêt (8) respective, dans une direction d'insertion (9),
et dans lequel la direction d'insertion (9) de chacun des éléments de connexion (3) est dans une direction concordant avec la direction de charge (6) de la charge supportée par le même élément de connexion (3),
dans lequel le corps de logement (2) comprend deux demi-coques (19), reliées l'une à l'autre par les moyens de liaison à charnière (5), lesdites demi-coques (19) pouvant être tournées librement l'une par rapport à l'autre autours de l'axe de rotation principal (4), dans lequel à chaque demi-coque (19) est connecté l'un des deux éléments de connexion (3),
**caractérisé en ce**
**qu'**une première demi-coque (19) définit deux guides d'insertion (26),
dans lequel, en faisant tourner au moins une des deux demi-coques (19), soit les guides d'insertion (26) soit le siège de connexion (7) fait dans la première demi-coque (19) peuvent être alignés avec le siège de connexion (7) fait sur la deuxième demi-coque opposée (19),
dans lequel chaque siège de connexion (7) comprend deux guides de connexion (25) et dans lequel, en faisant tourner au moins une des deux demi-coques (19), soit les guides d'insertion (26) soit les guides de connexion (25) faits dans la première demi-coque (19) peuvent être alignés avec les guides de connexion (25) faits sur la deuxième demi-coque (19) opposée,
dans lequel chaque demi-coque (19) définit une paroi surplombante (22) en regard de la demi-coque (19) opposée, une paroi inférieure (23) étant orientée à l'opposé de la demi-coque (19) opposée, et une paroi périphérique (24) interposée entre la paroi surplombante (22) et la paroi inférieure (23),
dans lequel les guides de connexion (25) sont opposés l'un à l'autre par rapport à l'axe de rotation principal (4),
dans lequel les guides de connexion (25) sont creusés dans la paroi surplombante (22) et s'étendent dans la demi-coque (19),
et dans lequel les guides de connexion (25) sont ouverts à la paroi périphérique (24), les guides d'insertion (26) définis dans la première demi-coque (19) sont opposés l'un à l'autre par rapport à l'axe de rotation principal (4),
dans lequel les guides d'insertion (26) sont creusés dans la paroi inférieure (23) et s'étendent dans la demi-coque (19), s'ouvrant dans la paroi surplombante (22),
et dans lequel les guides d'insertion (26) sont ouverts dans la paroi périphérique (24).

2. Dispositif (1) selon la revendication 1, dans lequel les éléments d'accouplement (3) sont connectés au corps de logement (2) moyennant une connexion géométrique (10),
et dans lequel la connexion géométrique (10) est réversible pour permettre à chaque élément d'accouplement (3) d'être déconnecté du corps de logement (2).

3. Dispositif (1) selon 1 revendication 2, dans lequel la connexion géométrique (10) constitue une contre-dépouille.

4. Dispositif (1) selon l'une des revendications précédentes, dans lequel les éléments d'accouplement (3) peuvent tourner librement les uns par rapport aux autres autour d'un deuxième axe de rotation (11) et dans lequel chaque deuxième axe de rotation (11) est défini par le siège de connexion respectif (7) à la paroi d'arrêt (8).

5. Dispositif (1) selon l'une des revendications précédentes, dans lequel les éléments d'accouplement (3) ont une forme d'anneau ouvert, afin de former deux fins d'anneau (12) et une ouverture de connexion (27) définie entre les deux fins d'anneau (12), ou ils ont une forme de poulie, de poly-ancre ou de connecteur.

6. Dispositif (1) selon la revendication 5, dans lequel chaque élément d'accouplement (3) comprend deux goupilles (13), chacune positionnée aux extrémités d'anneau (12) et s'étendant l'une vers l'autre dans l'élément d'accouplement (3),
dans lequel les goupilles (13) définissent chacune un pied de goupille (14) relié à l'extrémité d'anneau (12), une tête de goupille (15) opposée au pied de goupille (14) et logé dans le siège de connexion (7) du corps de logement (2) et un corps de goupille (16) interposé entre le pied de goupille (14) et la tête de goupille (15) et optionnellement, dans lequel :
- la tête de goupille (15) forme une section transversale élargie par rapport au corps de goupille (16) et/ou
- le pied de goupille (14) est inséré dans l'extrémité d'anneau (12) et est fixé à l'extrémité d'anneau (12) moyennant une rondelle (17) et/ou
- les deux goupilles (13) sont réalisées en un matériau plus résistant que le matériau de l'élément d'accouplement (3).

7. Dispositif (1) selon l'une des revendications précédentes, dans lequel chaque élément d'accouplement (3) comprend au moins une projection (18) s'étendant dans l'élément d'accouplement (3).

8. Dispositif (1) selon la revendication 7, dans lequel chaque élément d'accouplement (3) comprend deux projections (18) opposées l'une à l'autre, et dans lequel les projections sont positionnés au corps de logement (2) de façon à entourer le corps de logement (2),
et, optionnellement, les projections (18) sont configurées pour avoir une configuration de dents de scie.

9. Dispositif (1) selon l'une des revendications précédentes, dans lequel
- les moyens de connexion articulés (5) comprennent un palier axial (21) inséré dans une des deux demi-coques (19) et/ou
- les moyens de connexion articulés (5) comprennent une vis (20) s'étendant le long de l'axe de rotation principal (4), par les deux demi-coques (19) et par le logement axial (21).

10. Dispositif (1) selon la revendication 6, dans lequel les guides de connexion (25) sont formés de façon à constituer une liaison contre-dépouillée avec les têtes de goupille (13) de l'élément d'accouplement (3).

11. Dispositif (1) selon l'une des revendications précédentes et selon les revendications 9 et 10, dans lequel les guides d'insertion (26) sont formés sur la demi-coque (19) opposé à la demi-coque (19) dans laquelle le palier axial (21) est installé.

12. Dispositif (1) selon l'une des revendications précédentes et selon la revendication 10, dans lequel les guides d'insertion (26) sont perpendiculaires aux guides de connexion (25) par rapport à l'axe de rotation principal (4).

13. Dispositif (1) selon l'une des revendications précédentes, comprenant des moyens de verrouillage (28) configurés pour empêcher le démontage des moyens d'accouplement (3) du corps de logement (2).

14. Dispositif (1) selon l'une des revendications précédentes et selon la revendication 13, dans lequel les moyens de verrouillage (28) comprennent une capsule (29) configurée de façon à être insérée dans les guides d'insertion (26) et protéger les moyens d'accouplement (3) de sortir des guides d'insertion (26),
et optionnellement, la capsule (29) est faite en une seule pièce et peut être insérée dans les guides d'insertion (26) à travers la paroi de fond (23) de la demi-coque (19) et/ou la capsule (29) est réalisée en un matériau métallique et est fixée, par interférence, dans les guides d'insertion (26).

15. Dispositif (1) selon la revendication 14, dans lequel la capsule (29) forme un trou central (30) adapté pour être croisé par la vis (20), le dispositif (1) comprenant en outre une vis/écrou de fermeture (31), dans lequel la vis/écrou de fermeture peut être vissée sur la vis (20) afin de buter contre la capsule (29) et éviter que la capsule (29) sort des guides d'insertion (26), et dans lequel la vis/écrou de fermeture (31) forme une tête de vis/écrou (31) pour être vissée sur la vis (20).

16. Dispositif (1) selon l'une des revendications précédentes et selon la revendication 13, dans lequel les moyens de verrouillage (28) comprennent des moyens de fermeture par déclenchement et, optionnellement, les moyens de fermeture par déclenchement comprennent des boutons à ressort (34) positionnés aux guides d'insertion (26), et dans lequel les boutons à ressort (34) comprennent des boutons (36) pouvant être retirés dans le corps de logement (2) et des ressorts de compression (35) logés dans le corps de logement (2) et configurés pour mettre sous pression les boutons (36) sortant du corps de logement (2).
